# EUROPEAN PATENT SPECIFICATION

(11) **EP 1 241 372 B1**
(45) Date of publication and mention of the grant of the patent: **26.01.2005**
(21) Application number: 02075843.9
(22) Date of filing: 05.03.2002
(51) Int. Cl.: F16F 9/348

(54) **Hydraulic damper for a vehicle suspension system**
Hydraulischer Dämpfer für eine Fahrzeugaufhängung
Amortisseur hydraulique pour système de suspension de véhicule

(30) Priority: 17.03.2001 GB 0106677
(43) Date of publication of application: 18.09.2002
(73) Proprietor: Delphi Technologies, Inc., Troy, MI 48007 (US)
(72) Inventor: Candela, Miguel, 11130 Cadiz (ES)
(74) Representative: Denton, Michael John

(56) References cited:
- EP-A- 0 304 197
- DE-A- 19 725 864
- US-A- 2 138 513
- US-A- 3 164 225
- US-A- 3 874 487
- US-A- 4 685 545
- US-A- 4 971 181
- US-A- 5 921 360

## Description

### Technical Field

The present invention relates to a hydraulic damper for the suspension system of a motor vehicle, and in particular to the valves on the piston of the damper.

### Background of the Invention

Known suspension struts comprise a tube; a piston sealably slidably mounted in the tube and attached to a piston rod, the piston separating a compression chamber from a rebound chamber within the tube; a compression stroke valve mounted on the piston; and a rebound stroke valve mounted on the piston. The compression stroke valve acts as a one way valve to allow flow of fluid from the compression chamber to the rebound chamber through one or more compression flow passages in the piston during the compression stroke of the suspension strut. The rebound stroke valve acts as a one way valve which allows flow of fluid from the rebound chamber to the compression chamber through one or more rebound flow passages in the piston during the rebound stroke of the suspension strut. Typically, the valves comprise one or more discs which cover the flow passages and which deflect to allow fluid flow. The deflectable disc of the compression stroke valve are typically of larger diameter than the deflectable disc of the rebound stroke valve. In these known arrangements, the flow passages extend in a direction which is substantially parallel to the longitudinal axis of the piston rod, with the rebound flow passage or passages positioned radially inwards of the compression flow passage or passages. In this arrangement, one or more apertures are formed in the deflectable discs of the compression stroke valve to allow fluid flow through the rebound flow passage or passages during a rebound stroke. It is known to bias the deflectable discs of the valves to a closed position using a coil springs. Such an arrangement provides a blow-off characteristic during a rebound stroke or during a compression stroke at high speed, but uncontrolled damping at low speed.

US-A-4971181 discloses a hydraulic damper in accordance with the preamble of claim 1 or claim 2.

### Summary of the Invention

It is an object of the present invention to provide a controlled damping force during a compression stroke at low speed, whilst retaining a blow-off characteristic during a rebound stroke.

A hydraulic damper in accordance with the present invention is characterised by the features specified in the characterising portion of claim 1 or claim 2.

The present invention provides a hydraulic damper which has blow-off characteristics during rebound strokes, and which has controlled damping forces during low speed compression strokes.

### Brief Description of the Drawings

The present invention will now be described, by way of example, with reference to the accompanying drawings, in which:-
Figure 1 is a cross-sectional view of a hydraulic damper in accordance with the present invention;
Figure 2 is an enlarged cross-sectional view of the piston assembly and associated valves of the damper of Figure 1;
Figure 3 is an enlarged cross-sectional view of a second embodiment of piston assembly and associated valves for a hydraulic damper in accordance with the present invention; and
Figure 4 is an enlarged cross-sectional view of a third embodiment of piston assembly and associated valves for a hydraulic damper in accordance with the present invention.

### Description of the Preferred Embodiment

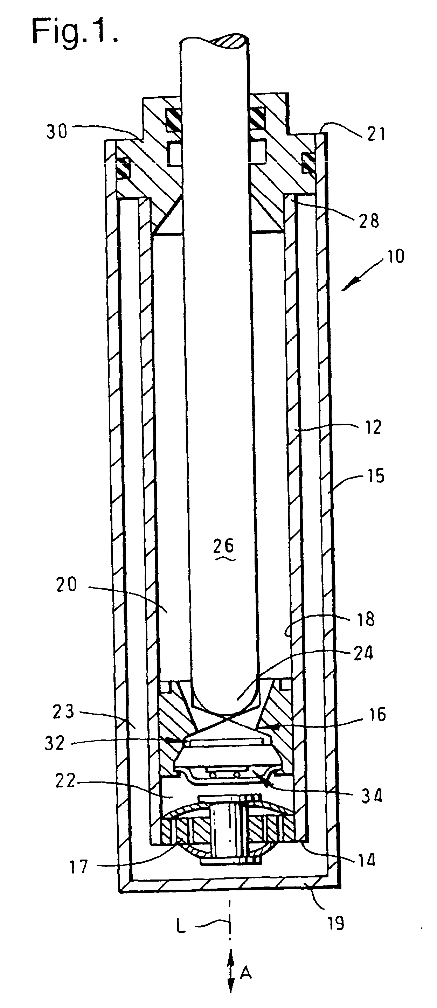

Referring to Figure 1, the hydraulic damper 10 in accordance with the present invention comprises an inner elongate tubular housing 12, and an outer elongate tubular housing 15 which is substantially coaxial with the inner housing on an axis L. The inner housing 12 is substantially closed at one end 14 by a compensation valve 17. A piston assembly 16 makes a sealing sliding fit with the inner surface 18 of the inner housing 12. The piston assembly 16 defines and separates a rebound chamber 20 and a compression chamber 22 within the inner housing 12. The piston assembly 16 is attached to one end 24 of a piston rod 26 which extends through the rebound chamber 20 and out of the other end 28 of the inner housing 12. The end 19 of the outer housing 15 adjacent the compensation valve 17 is closed. A piston rod guide 30 is secured in the other end 28 of the inner housing 12 to close the rebound chamber 20. The piston rod guide 30 also closes the other end 21 of the outer housing 15. The piston rod 26 makes a sealing sliding fit with the piston rod guide 30. The area between the inner housing 12 and the outer housing 15 defines a compensation chamber 23. The piston rod 26, the outer housing 15 and the inner housing 12 extend in an axial direction A and are substantially coaxial on axis L. The piston assembly 16 and piston rod 26 can move relative to the inner housing 12 in the axial direction A. Hydraulic fluid substantially fills the rebound chamber 20 and the compression chamber 22 to damp reciprocating movement, in the axial direction A, of the piston assembly 16 and the piston rod 26 relative to the inner housing 12. The compensation chamber 23 is partly filled with hydraulic fluid and acts as a reservoir for the fluid in the rebound chamber 20 and the compression chamber 22. The hydraulic damper 10 is mountable in a motor vehicle (not shown) in any standard manner. The compensation valve 17 and the piston rod guide 30 may be any suitable conventional design known to those skilled in the art, and will not be described in greater detail.

A compression stroke valve 32 and a rebound stroke valve 34 (described in more detail below) on the piston assembly 16 allow hydraulic fluid flow between the rebound chamber 20 and the compression chamber 22. As the piston assembly 16 moves towards the closed end 14 of the inner housing 12 (a compression stroke), the length of the damper 10 is being compressed and fluid flows past the compression stroke valve 32 from the compression chamber 22 to the rebound chamber 20. As the piston assembly 16 moves away from the closed end 14 of the inner housing 12 (a rebound stroke), the length of the damper 10 is being extended and fluid flows past die rebound stroke valve 34 from the rebound chamber 20 to the compression chamber 22.

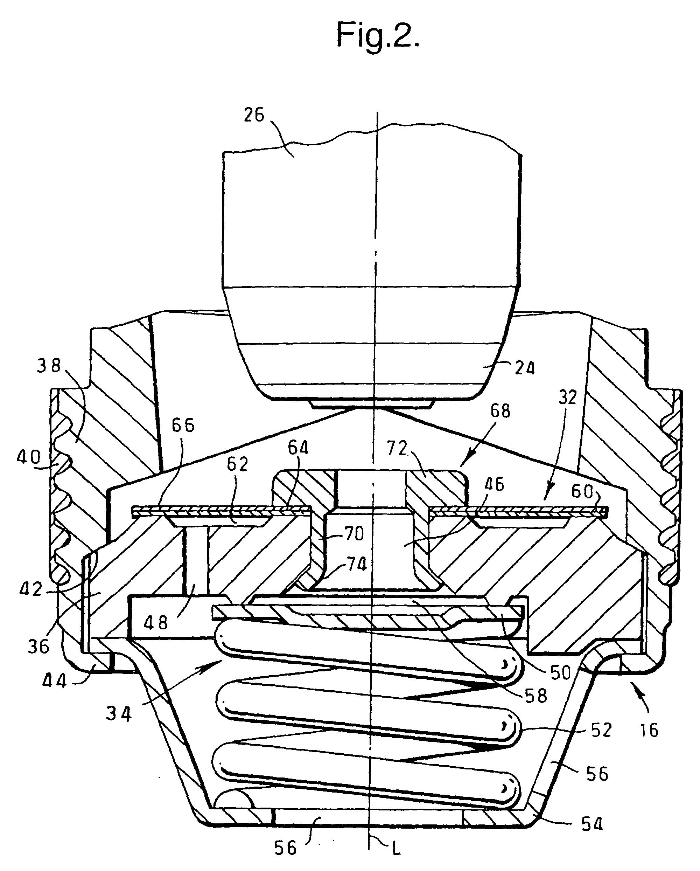

A first embodiment of the piston assembly 16, the compression stroke valve 32, and rebound stroke valve 34 is shown in Figure 2. The piston assembly 16 includes an inner body portion 36 and an outer body portion 38, which are substantially coaxial on axis L. The outer body portion 38 has an outer annular seal 40 of Teflon material mounted thereon, which makes a sealing sliding fit with the inner surface 18 of the inner housing 12. The outer body portion 38 is secured to the one end 24 of the piston rod 26 in any suitable manner. The inner body portion 36 is clamped to the outer body portion 38 between an inner annular shoulder 42 of the outer body portion, and an inturned annular lip 44 on the outer body portion. A rebound flow passage 46 extends through the inner body portion 36 in a substantially axial direction, and preferably on the axis L. A compression flow passage 48 extends through the inner body portion 36 in a substantially axial direction, and is positioned radially outwards of the rebound flow passage 46.

The rebound stroke valve 34 comprises a substantially rigid disc 50, a coil spring 52, and a spring cage 54, all of which are positioned on the side of the piston assembly 16 directed towards the compression chamber 22. The spring cage 54 is secured between the inner body portion 36 and the inturned lip 44 of the outer body portion 38. The spring cage 54 has apertures 56 therein for fluid flow with the compression chamber 22. The disc 50 covers the end 58 of the rebound flow passage 46 directed towards the compression chamber 22. The coil spring 52 is positioned between the spring cage 54 and the disc 50 and acts on the disc to normally close the rebound flow passage 46 as shown in Figure 2. The rebound stroke valve 34 may include a different type of spring biasing the disc.

The compression stroke valve 32 comprises deflectable discs 60 which are positioned on the side of the piston assembly 16 directed towards the rebound chamber 20. The deflectable discs 60 are substantially annular and cover the end 62 of the compression flow passage 48 directed towards the rebound chamber 20. The deflectable discs 60 have an inner circumferential edge portion 64 (which is radially inwards of the compression flow passage 48) and an outer circumferential edge portion 66 (which is radially outwards of the compression flow passage). The piston assembly 16 further includes an annular member which, in this first embodiment, is in the form of a cylindrical rivet 68 which has a tubular shank 70 and an annular head 72. The shank 70 extends past the inner edge portion 64 of the deflectable discs 60 and into the rebound flow passage 46. The free end 74 of the shank 70 is splayed outwards to secure the rivet 68 in the rebound flow passage 46. The head 72 engages the deflectable discs 60 at the inner edge portion 64 to clamp the inner edge portion against the inner body portion 36 of the piston assembly 16. The outer edge portion 66 of the deflectable discs 60 remain free. The number of deflectable discs 60 may be increased or decreased as required.

During a rebound stroke, fluid pressure increases in the rebound chamber 20 until a predetermined level is reached at which point the disc 50 is pushed away from the inner body portion 36 against the bias of the spring 52. The end 58 of the rebound flow passage 46 is therefore opened, and fluid flows from the rebound chamber 20 through the rivet 68, the rebound flow passage 46, and the apertures 56 in the spring cage 54, into the compression chamber 22. This arrangement provides a blow-off characteristic during a rebound stroke.

During a compression stroke, fluid pressure increases in the compression chamber 22 which acts on the deflectable discs 60. As the deflectable discs 60 are free at their outer edge portion 66, the outer edge portion is pushed away from the inner body portion 36. The end 62 of the compression flow passage 48 is therefore opened, and fluid flows from the compression chamber 22 through the compression flow passage 48 into the rebound chamber 20. This arrangement provides a controlled damping force during compression strokes at low speed.

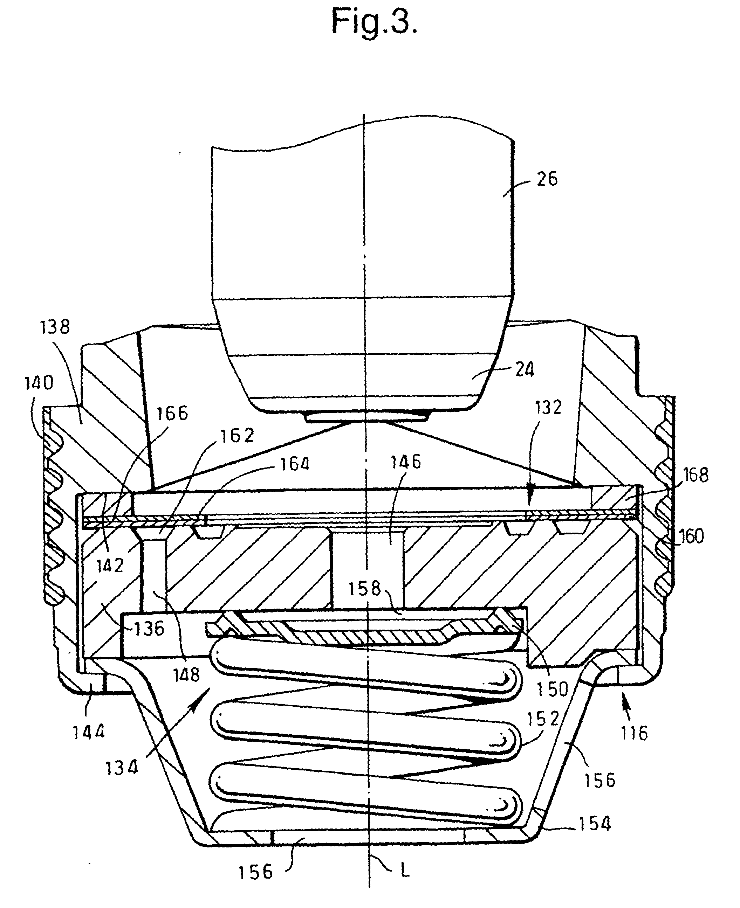

A second embodiment of the piston assembly, the compression stroke valve, and rebound stroke valve is shown in Figure 3. Relative to Figure 2, like parts have been given the same reference numeral, but with the prefix 100. In this second embodiment, the rebound stroke valve 134 is substantially identical to the rebound stroke valve 34 of Figure 2. Also, the inner body portion 136 and the outer body portion 138 of the piston assembly 116 are substantially the same as the inner body portion 36 and outer body portion 38 of the piston assembly 16 of Figure 2. Further, the compression stroke valve 132 is substantially identical to the compression stroke valve 32 of Figure 2. The main difference between the first embodiment and the second embodiment relates to the annular member of the piston assembly 116. In this second embodiment, the annular member is in the form of a ring 168 which is clamped between inner body portion 136 and the shoulder 142 on the outer body portion 138. The ring 168 engages the deflectable discs 160 at the outer edge portion 166 to clamp the outer edge portion against the inner body portion 136 of the piston assembly 116. The inner edge portion 164 of the deflectable discs 160 remain free.

During a rebound stroke, fluid pressure increases in the rebound chamber 20 until a predetermined level is reached at which point the disc 150 is pushed away from the inner body portion 136 against the bias of the spring 152. The end 158 of the rebound flow passage 146 is therefore opened, and fluid flows from the rebound chamber 20 through the rebound flow passage 146, and the apertures 156 in the spring cage 154, into the compression chamber 22. This arrangement provides a blow-off characteristic during a rebound stroke.

During a compression stroke, fluid pressure increases in the compression chamber 22 which acts on the deflectable discs 160. As the deflectable discs 160 are free at their inner edge portion 164, the inner edge portion is pushed away from the inner body portion 136. The end 162 of the compression flow passage 148 is therefore opened, and fluid flows from the compression chamber 22 through the compression flow passage 148 into the rebound chamber 20. This arrangement provides a controlled damping force during compression strokes at low speed.

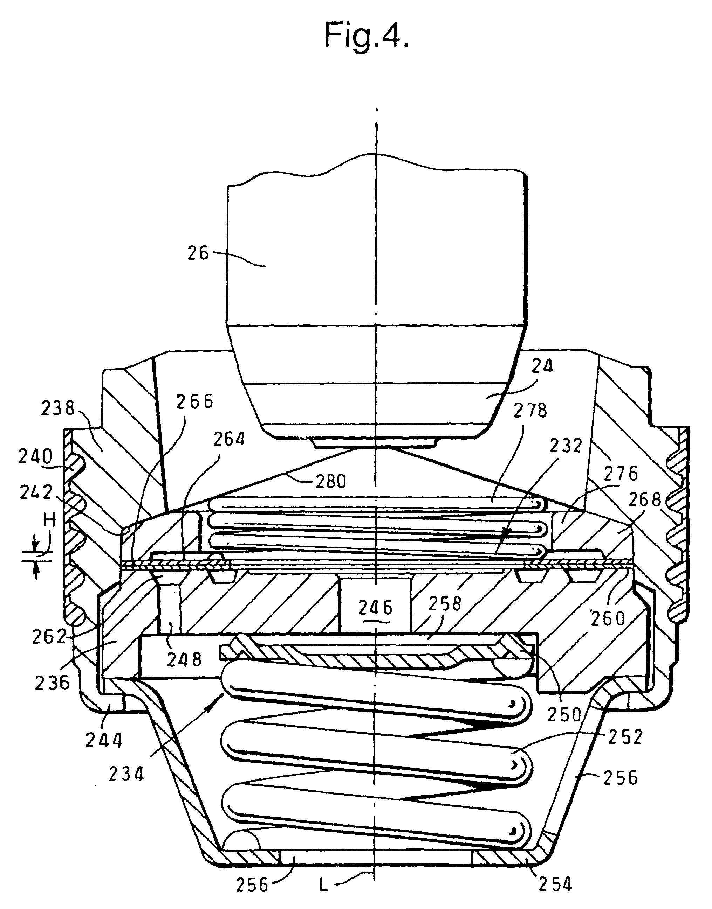

A third embodiment of the piston assembly, the compression stroke valve, and rebound stroke valve is shown in Figure 4. Relative to Figure 2, like parts have been given the same reference numeral, but with the prefix 200. In this second embodiment, the rebound stroke valve 234 is substantially identical to the rebound stroke valve 34 of Figure 2. Also, the inner body portion 236 and the outer body portion 238 of the piston assembly 216 are substantially the same as the inner body portion 36 and outer body portion 38 of the piston assembly 16 of Figure 2. Further, the compression stroke valve 232 is substantially identical to the compression stroke valve 32 of Figure 2. The main difference between the first embodiment and the third embodiment relates to the annular member of the piston assembly 216. In this third embodiment, the annular member is in the form of a ring 268 which is clamped between inner body portion 236 and the shoulder 242 on the outer body portion 238. The ring 268 engages the deflectable discs 260 at the outer edge portion 266 to clamp the outer edge portion against the inner body portion 236 of the piston assembly 216. The inner edge portion 264 of the deflectable discs 260 remain free. Further, the ring 268 has an inwardly directed annular rib 276 which is axially spaced from the deflectable discs 260 by a predetermined height H. Also, a coil spring 278 is compressed between a shoulder 280 on the outer body portion 238 and the inner edge portion 264 of the deflectable discs 260.

During a rebound stroke, fluid pressure increases in the rebound chamber 20 until a predetermined level is reached at which point the disc 250 is pushed away from the inner body portion 236 against the bias of the spring 252. The end 258 of the rebound flow passage 246 is therefore opened, and fluid flows from the rebound chamber 20 through the rebound flow passage 246, and the apertures 256 in the spring cage 254, into the compression chamber 22. This arrangement provides a blow-off characteristic during a rebound stroke.

During a compression stroke, fluid pressure increases in the compression chamber 22 which acts on the deflectable discs 260. As the deflectable discs 260 are free at their inner edge portion 264, the inner edge portion is pushed away from the inner body portion 236. The end 262 of the compression flow passage 248 is therefore opened, and fluid flows from the compression chamber 22 through the compression flow passage 248 into the rebound chamber 20. This arrangement provides a controlled damping force during compression strokes at low speed. The coil spring 278 acts on the deflectable discs 260 to provide added stiffness for the deflectable discs. The rib 276 on the ring 268 acts as a stop member to restrict the amount of deflection of the inner edge portion 264 during a compression stroke.

Although the above described embodiments refer to a damper having an inner and an outer tubular housing (usually referred to as a twin-tube damper), the present invention is also applicable to a monotube damper in which the housing comprises a single tubular housing.

## Claims

1. A hydraulic damper (10) for a suspension system comprising an elongate tubular housing (12) substantially closed at both ends (19,21) and containing fluid; a piston assembly (16) slidably mounted in the housing and making a sealing fit therewith, the piston assembly separating a compression chamber (22) and a rebound chamber (20) within the housing; a piston rod (26) attached to the piston assembly, having a longitudinal axis (L), and extending through the rebound chamber and out of one end (21) of the housing; a compression stroke valve (32) mounted on the piston assembly on the rebound chamber side thereof for controlling flow of fluid during a compression stroke through a compression flow passage (48) extending through a body portion (36) of the piston assembly; and a rebound stroke valve (34) mounted on the piston assembly on the compression chamber side thereof for controlling flow of fluid during a rebound stroke through a rebound flow passage (46) extending through the body portion of the piston assembly; wherein the rebound stroke valve comprises a disc (50) which covers one end (58) of the rebound flow passage, and a spring (52) acting on the disc (50) to close the rebound flow passage; wherein the compression stroke valve comprises one or more deflectable discs (60) which cover one end (62) of the compression flow passage, the deflectable disc or discs being substantially annular; and wherein the piston assembly further comprises an annular member (68) which is secured to the body portion; **characterized in that** the annular member engages the inner edge portion (64) of the deflectable disc or discs to secure the deflectable disc or discs to the body portion to close the compression flow passage; and **in that** the annular member comprises a cylindrical rivet (68) having a tubular shank (70) and an annular head (72), the shank being secured in the rebound flow passage in the body portion of the piston assembly, and the head engaging the inner edge portion of the deflectable disc or discs to secure the deflectable disc or discs to the body portion.

2. A hydraulic damper (10) for a suspension system comprising an elongate tubular housing (12) substantially closed at both ends (19,21) and containing fluid; a piston assembly (16) slidably mounted in the housing and making a sealing fit therewith, the piston assembly separating a compression chamber (22) and a rebound chamber (20) within the housing; a piston rod (26) attached to the piston assembly, having a longitudinal axis (L), and extending through the rebound chamber and out of one end (21) of the housing; a compression stroke valve (132) mounted on the piston assembly on the rebound chamber side thereof for controlling flow of fluid during a compression stroke through a compression flow passage (148) extending through a body portion (136) of the piston assembly; and a rebound stroke valve (134) mounted on the piston assembly on the compression chamber side thereof for controlling flow of fluid during a rebound stroke through a rebound flow passage (146) extending through the body portion of the piston assembly; wherein the rebound stroke valve comprises a disc (150) which covers one end (158) of the rebound flow passage, and a spring (152) acting on the disc (50) to close the rebound flow passage; wherein the compression stroke valve comprises one or more deflectable discs (160) which cover one end (162) of the compression flow passage, the deflectable disc or discs being substantially annular; and wherein the piston assembly further comprises an annular member (168) which is secured to the body portion; **characterized in that** the annular member engages the outer edge portion of the deflectable disc or discs to secure the deflectable disc or discs to the body portion to close the compression flow passage; and **in that** the annular member comprises a ring (168) which engages the outer edge portion of the deflectable disc or discs and which is clamped to the body portion of the piston assembly to fixedly secure the outer edge portion of the deflectable disc or discs to the body portion.

3. A hydraulic damper as claimed in Claim 2, wherein the ring (268) has an inwardly directed annular rib (276) which is axially spaced from the deflectable disc or discs (260) by a predetermined height (H).

4. A hydraulic damper as claimed in Claim 2 or Claim 3, wherein a spring (278) is compressed between a shoulder (280) on the body portion (236,238) and the inner edge portion of the deflectable disc or discs (260).

5. A hydraulic damper as claimed in any one of the preceding Claims, wherein the body portion of the piston assembly comprises an inner body portion (36) and an outer body portion (38) which are substantially coaxial, the inner body portion being secured to the outer body portion; and wherein the rebound flow passage (46) and the compression flow passage (48) extend through the inner body portion.

6. A hydraulic damper as claimed in Claim 5, wherein the inner body portion (36) is secured to the outer body portion (38) between an inturned lip (44) on the outer body portion and an inner annular shoulder (42) of the outer body portion.

7. A hydraulic damper as claimed in any one of the preceding Claims, wherein the rebound flow passage (46) and the compression flow passage (48) extend in an axial direction (A).

8. A hydraulic damper as claimed in any one of the preceding Claims, wherein the rebound flow passage (46) is substantially coaxial with the longitudinal axis (L) of the piston rod (26).

## Patentansprüche

1. Hydraulischer Stoßdämpfer (10) für ein Aufhängungssystem, der umfasst: ein längliches rohrförmiges Gehäuse (12), das im Wesentlichen an beiden Enden (19, 21) verschlossen ist und ein Fluid enthält; eine Kolbenanordnung (16), die in dem Gehäuse verschiebbar befestigt ist und mit diesem einen dichtenden Sitz bildet, wobei die Kolbenanordnung eine Kompressionskammer (22) und eine Rückfederungskammer (20) innerhalb des Gehäuses trennt; eine an der Kolbenanordnung angebrachte Kolbenstange (26) mit einer Längsachse (L), die sich durch die Rückfederungskammer hindurch und aus einem Ende (21) des Gehäuses heraus erstreckt; ein Kompressionshubventil (32), das an der Kolbenanordnung an deren Seite der Rückfederungskammer befestigt ist, um einen Fluidstrom während eines Kompressionshubs durch einen Kompressions-Strömungskanal (48), der sich durch einen Körperabschnitt (36) der Kolbenanordnung erstreckt, zu steuern; und ein Rückfederungshubventil (34), das an der Kolbenanordnung an deren Seite der Kompressionskammer davon befestigt ist, um einen Fluidstrom während eines Rückfederungshubs durch einen Rückfederungs-Strömungskanal (46), der sich durch den Körperabschnitt der Kolbenanordnung erstreckt, zu steuern; wobei das Rückfederungshubventil eine Scheibe (50), die ein Ende (58) des Rückfederungs-Strömungskanals bedeckt, und eine Feder (52), die auf die Scheibe (50) wirkt, um den Rückfederungs-Strömungskanal zu schließen, umfasst; wobei das Kompressionshubventil eine oder mehrere durchbiegungsfähige Scheibe/n (60) umfasst, die ein Ende (62) des Kompressions-Strömungskanals bedeckt / en, wobei die durchbiegungsfähige/n Scheibe oder Scheiben im Wesentlichen ringförmig ist / sind; und wobei die Kolbenanordnung ferner ein ringförmiges Element (68) umfasst, das an dem Körperabschnitt befestigt ist;
**dadurch gekennzeichnet, dass**
das ringförmige Element mit dem inneren Randabschnitt (64) der durchbiegungsfähigen Scheibe oder Scheiben in Eingriff steht, um die durchbiegungsfähige/n Scheibe oder Scheiben an dem Körperabschnitt zu befestigen, um den Kompressions-Strömungskanal zu schließen; und dadurch, dass das ringförmige Element einen zylindrischen Niet (68) mit einem Rohrschaft (70) und einem ringförmigen Kopf (72) umfasst, wobei der Schaft in dem Rückfederungs-Strömungskanal in dem Körperabschnitt der Kolbenanordnung befestigt ist, und der Kopf mit dem inneren Randabschnitt der durchbiegungsfähigen Scheibe oder Scheiben in Eingriff steht, um die durchbiegungsfähige/n Scheibe oder Scheiben an dem Körperabschnitt zu befestigen.

2. Hydraulischer Stoßdämpfer (10) für ein Aufhängungssystem, der umfasst: ein längliches rohrförmiges Gehäuse (12), das im Wesentlichen an beiden Enden (19, 21) verschlossen ist und ein Fluid enthält; eine Kolbenanordnung (16), die in dem Gehäuse verschiebbar befestigt ist und mit diesem einen dichtenden Sitz bildet, wobei die Kolbenanordnung eine Kompressionskammer (22) und eine Rückfederungskammer (20) innerhalb des Gehäuses trennt; eine an der Kolbenanordnung angebrachte Kolbenstange (26) mit einer Längsachse (L), die sich durch die Rückfederungskammer hindurch und aus einem Ende (21) des Gehäuses heraus erstreckt; ein Kompressionshubventil (132), das an der Kolbenanordnung an deren Seite der Rückfederungskammer befestigt ist, um einen Fluidstrom während eines Kompressionshubs durch einen Kompressions-Strömungskanal (148), der sich durch einen Körperabschnitt (136) der Kolbenanordnung erstreckt, zu steuern; und ein Rückfederungshubventil (134), das an der Kolbenanordnung an deren Seite der Kompressionskammer befestigt ist, um einen Fluidstrom während eines Rückfederungshubs durch einen Rückfederungs-Strömungskanal (146), der sich durch den Körperabschnitt der Kolbenanordnung erstreckt, zu steuern; wobei das Rückfederungshubventil eine Scheibe (150), die ein Ende (158) des Rückfederungs-Strömungskanals bedeckt, und eine Feder (152), die auf die Scheibe (50) wirkt, um den Rückfederungs-Strömungskanal zu schließen, umfasst; wobei das Kompressionshubventil eine oder mehrere durchbiegungsfähige Scheibe/n (160) umfasst, die ein Ende (162) des Kompressions-Strömungskanals bedeckt / en, wobei die durchbiegungsfähige/n Scheibe oder Scheiben im Wesentlichen ringförmig ist / sind; und wobei die Kolbenanordnung ferner ein ringförmiges Element (168) umfasst, das an dem Körperabschnitt befestigt ist;
**dadurch gekennzeichnet, dass**
das ringförmige Element mit dem äußeren Randabschnitt der durchbiegungsfähigen Scheibe oder Scheiben in Eingriff steht, um die durchbiegungsfähige/n Scheibe oder Scheiben an dem Körperabschnitt zu befestigen, um den Kompressions-Strömungskanal zu schließen; und dadurch, dass das ringförmige Element einen Ring (168) umfasst, der mit dem äußeren Randabschnitt der durchbiegungsfähigen Scheibe oder Scheiben in Eingriff steht, und der derart an den Körperabschnitt der Kolbenanordnung geklemmt ist, dass der äußere Randabschnitt der durchbiegungsfähigen Scheibe oder Scheiben fest an dem Körperabschnitt befestigt ist.

3. Hydraulischer Stoßdämpfer nach Anspruch 2, wobei der Ring (268) einen nach innen gerichteten ringförmigen Steg (276) aufweist, der von der / den durchbiegungsfähigen Scheibe oder Scheiben (260) um eine vorbestimmte Höhe (H) axial beabstandet ist.

4. Hydraulischer Stoßdämpfer nach Anspruch 2 oder 3, wobei eine Feder (278) zwischen einer Schulter (280) an dem Körperabschnitt (236, 238) und dem inneren Randabschnitt der durchbiegungsfähigen Scheibe oder Scheiben (260) zusammengedrückt ist.

5. Hydraulischer Stoßdämpfer nach einem der vorhergehenden Ansprüche, wobei der Körperabschnitt der Kolbenanordnung einen inneren Körperabschnitt (36) und einen äußeren Körperabschnitt (38) umfasst, die im Wesentlichen koaxial sind, wobei der innere Körperabschnitt an dem äußeren Körperabschnitt befestigt ist; und wobei der Rückfederungs-Strömungskanal (46) und der Kompressions-Strömungskanal (48) sich durch den inneren Körperabschnitt erstrecken.

6. Hydraulischer Stoßdämpfer nach Anspruch 5, wobei der innere Körperabschnitt (36) zwischen einer einwärts gedrehten Lippe (44) an dem äußeren Körperabschnitt und einer inneren ringförmigen Schulter (42) des äußeren Körperabschnittes an dem äußeren Körperabschnitt (38) befestigt ist.

7. Hydraulischer Stoßdämpfer nach einem der vorhergehenden Ansprüche, wobei der Rückfederungs-Strömungskanal (46) und der Kompressions-Strömungskanal (48) sich in einer axialen Richtung (A) erstrecken.

8. Hydraulischer Stoßdämpfer nach einem der vorhergehenden Ansprüche, wobei der Rückfederungs-Strömungskanal (46) im Wesentlichen koaxial zur Längsachse (L) der Kolbenstange (26) ist.

## Revendications

1. Amortisseur hydraulique (10) pour un système de suspension comprenant un logement tubulaire allongé (12) sensiblement fermé aux deux extrémités (19,21) et contenant un fluide ; un assemblage de piston (16) monté coulissant dans le logement et constituant avec ce dernier un ajustement d'étanchéité, l'assemblage de piston séparant une chambre de compression (22) et une chambre de refoulement (20) au sein du logement ; une tige de piston (26) fixée à l'assemblage de piston, présentant un axe longitudinal (L), traversant la chambre de refoulement et sortant par une des extrémités (21) du logement ; une soupape de course de compression (32) montée sur l'assemblage de piston sur le côté de ladite chambre de refoulement de façon à contrôler le flux de fluide au cours d'une course de compression via un passage de flux de compression (48) traversant une partie de corps (36) de l'assemblage de piston ; et une soupape de course de refoulement (34) montée sur l'assemblage de piston sur le côté de la chambre de compression de façon à contrôler le flux de fluide au cours d'une course de refoulement via un passage de flux de refoulement (46) s'étendant via la partie de corps de l'assemblage de piston ; dans lequel la soupape de course de refoulement comprend un disque (50) qui couvre une extrémité (58) du passage de flux de refoulement, et un ressort (52) qui agit sur le disque (50) de façon à fermer le passage de flux de refoulement, dans lequel la soupape de course de compression comprend un ou plusieurs disques articulés (60) qui couvrent une extrémité (62) du passage de flux de compression, le(s) disque(s) articulé(s) étant sensiblement annulaire(s) ; et dans lequel l'assemblage de piston comprend en outre un élément annulaire (68) qui est fixé à la partie de corps ; **caractérisé en ce que** ledit élément annulaire prend appui sur la partie de bord interne (64) du (des) disque(s) articulé(s) afin de fixer le(s) disque(s) articulé(s) à la partie de corps de façon à fermer le passage de flux de compression ; et **en ce que** l'élément annulaire comprend un rivet cylindrique (68) ayant une tige de rivet tubulaire (70) et une tête annulaire (72), ladite tige de rivet étant fixée au passage de flux de refoulement dans la partie de corps de l'assemblage de piston, et ladite tête prenant appui sur la partie de bord interne du (des) disque(s) articulé(s) de façon à fixer le(s) disque(s) articulé(s) à la partie de corps.

2. Amortisseur hydraulique (10) pour un système de suspension comprenant un logement tubulaire allongé (12) sensiblement fermé aux deux extrémités (19,21) et contenant un fluide ; un assemblage de piston (16) monté coulissant dans le logement et constituant avec ce dernier un ajustement d'étanchéité, l'assemblage de piston séparant une chambre de compression (22) et une chambre de refoulement (20) au sein du logement ; une tige de piston (26) fixée à l'assemblage de piston, présentant un axe longitudinal (L), traversant la chambre de refoulement et sortant par une des extrémités (21) du logement ; une soupape de course de compression (132) montée sur l'assemblage de piston sur le côté de ladite chambre de refoulement de façon à contrôler le flux de fluide au cours d'une course de compression via un passage de flux de compression (148) traversant une partie de corps (136) de l'assemblage de pistons ; et une soupape de course de refoulement (134) montée sur l'assemblage de piston sur le côté de la chambre de compression de façon à contrôler le flux de fluide au cours d'une course de refoulement via un passage de flux de refoulement (46) traversant la partie de corps de l'assemblage de piston ; dans lequel la soupape de course de refoulement comprend un disque (150) qui couvre une extrémité (158) du passage de flux de refoulement, et un ressort (152) qui agit sur le disque (150) de façon à fermer le passage de flux de refoulement, dans lequel la soupape de course de compression comprend un ou plusieurs disques articulés (160) qui couvrent une extrémité (162) du passage de flux de compression, le(s) disque(s) articulé(s) étant sensiblement annulaire(s) ; et dans lequel l'assemblage de piston comprend en outre un élément annulaire (168) qui est fixé à la partie de corps ; **caractérisé en ce que** ledit élément annulaire pénètre dans la partie de bord externe du (des) disque(s) articulé(s) afin de fixer le(s) disque(s) articulé(s) à la partie de corps de façon à fermer le passage de flux de compression; et **en ce que** l'élément annulaire comprend un segment (168) qui pénètre dans la partie de bord externe du ou des disque(s) articulé(s) et qui est logé à l'intérieur de la partie de corps de l'assemblage de pistons de façon à fixer de manière permanente la partie de bord externe du ou des disque(s) articulé(s) à la partie de corps.

3. Amortisseur hydraulique selon la revendication 2, dans lequel le segment (268) présente une nervure (276) annulaire dirigée vers l'intérieur qui est espacée axialement du ou des disque(s) articulé(s) (260) par une hauteur prédéterminée (H).

4. Amortisseur hydraulique selon la revendication 2 ou 3, dans lequel un ressort (278) est comprimé entre un épaulement (280) sur la partie de corps (236,238) et la partie de bord interne du ou des disque(s) articulé(s) (260).

5. Amortisseur hydraulique selon l'une quelconque des revendications précédentes, dans lequel la partie de corps de l'assemblage de piston comprend une partie de corps interne (36) et une partie de corps externe (38) qui sont sensiblement coaxiales, la partie de corps interne étant fixée à la partie de corps externe ; et dans lequel le passage de flux de refoulement (46) et le passage de flux de compression (48) pénètrent dans la partie de corps interne.

6. Amortisseur hydraulique selon la revendication 5, dans lequel la partie de corps interne (36) est fixée à la partie de corps externe (38) entre une bride de revers (44) sur la partie de corps externe et un épaulement annulaire interne (42) de la partie de corps externe.

7. Amortisseur hydraulique selon l'une quelconque des revendications précédentes, dans lequel le passage de flux de refoulement (46) et le passage de flux de compression (48) s'étendent dans la direction axiale (A).

8. Amortisseur hydraulique selon l'une quelconque des revendications précédentes, dans lequel le passage de flux de refoulement (46) est sensiblement coaxial par rapport à l'axe longitudinal (L) de la tige de piston (26).
